Europäisches Patentamt

(19) European Patent Office

Office européen des brevets

(11) Numéro de publication: **0 052 045**
**B1**

(12) **FASCICULE DE BREVET EUROPEEN**

(45) Date de publication du fascicule du brevet: 08.01.86

(21) Numéro de dépôt: **81401710.9**

(22) Date de dépôt: **27.10.81**

(51) Int. Cl.⁴: **B 67 C 7/00**, B 67 B 3/062, B 65 G 47/24

(54) Machine automatique à capsuler et étiqueter les bouteilles ou contenants analogues.

(30) Priorité: **07.11.80 FR 8023821**

(43) Date de publication de la demande:
**19.05.82 Bulletin 82/20**

(45) Mention de la délivrance du brevet:
**08.01.86 Bulletin 86/02**

(84) Etats contractants désignés:
**DE IT**

(56) Documents cités:
**EP-A-0 012 659**
**DE-A-2 548 976**
**FR-A-2 005 132**
**US-A-3 451 523**

(73) Titulaire: **Etablissements LARRIEU-BEDIN "LA GIRONDINE"**
**17, rue Mondon B.P. No. 58**
**F-33110 Le Bouscat (Gironde) (FR)**

(72) Inventeur: **Bedin, Jean**
**251, rue Camille Godard**
**F-33000 Bordeaux Gironde (FR)**

(74) Mandataire: **Bloch, Robert et al**
**39 avenue de Friedland**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

L'invention vise à assurer un capsulage et un étiquetage précis, dans les cas où la capsule de surbouchage présente des signes ou des dessins par rapport auxquels la réalisation du capsulage (par exemple quatre plis couchés deux à deux de façon symétrique) et les étiquettes doivent être disposées de façon bien déterminée.

C'est le cas, par exemple, des bouteilles de champagne sur lesquelles les capsules de surbouchage portent un cartouche — sur lequel figure le nom du producteur — qui doit être centré par rapport au plissage de la capsule et aux différentes étiquettes.

Dans les machines connues, les bouteilles porteuses de leurs capsules sont orientées par rotation autour de leur axe pour se présenter de façon voulue, une première fois, devant le poste de capsulage puis, une seconde fois, devant le poste d'étiquetage.

Il résulte de cette double orientation des défauts ou imprécisions dans les positions relatives des plis par rapport aux inscriptions et des étiquettes par rapport aux plis, du fait, notamment, du poids relativement important des bouteilles et donc de l'inertie rendant les arrêts de leur mouvement de rotation assez imprécis.

On connaît par le brevet DE—A—2 548 976 (correspondant au préambule de la revendication 1) une machine automatique à capsuler et à étiqueter des bouteilles et, par le brevet EP—A—0 012 659, un dispositif destiné à orienter et positionner des capsules destinées à coiffer des bouteilles.

La présente invention prévoit, dans une machine du type décrit au premier de ces brevets et dotée d'un dispositif du type décrit au second, c'est-à-dire une machine comportant des moyens d'étiquetage, des moyens de capsulage, des moyens mobiles supports des bouteilles agencés pour faire défiler les bouteilles face aux moyens de capsulage et aux moyens d'étiquetage, des moyens d'amenée des bouteilles auxdits moyens supports, des moyens d'orientation des capsules et des moyens de prise et de pose des capsules orientées sur les bouteilles, de lui faire comporter des moyens d'entraînement synchronisé desdits moyens précédents et que les moyens de prise et de pose des capsules orientées sont solidaires en déplacement des moyens-supports des bouteilles et sont agencés pour déposer les capsules orientées sur les bouteilles maintenues fixes par rapport à leurs moyens de capsulage respectifs.

La machine selon l'invention assure alors un capsulage et un étiquetage extrêmement précis.

Les moyens d'orientation des capsules peuvent être constitués par des pièces-supports de forme géométrique précise voulue, entraînées en rotation par le moteur général de la machine, par l'intermédiaire d'un embrayage-frein, lui-même commandé par une cellule sensible à un repère sur chaque capsule.

Il peut être prévu une cellule par pièce-support et une pluralité de groupes support-cellule montés sur un plateau rotatif de façon à augmenter la capacité des moyens d'orientation.

Dans une forme de réalisation particulièrement avantageuse, cas d'une machine rotative, multiposte du type carrousel, le plateau rotatif d'orientation est monté entre la croix d'entrée et la croix de sortie d'une étiqueteuse, et les moyens de prise des capsules orientées sont solidaires en rotation du plateau porteur des sellettes supportant les bouteilles à étiqueter.

Dans cette forme de réalisaton, les moyens de prise des capsules orientées peuvent avantageusement être montés coaxiaux aux têtes de capsulage et aux sellettes-supports des bouteilles.

D'autres détails de réalisation de la machine selon l'invention ressortiront de la description qui va suivre d'un exemple de réalisation de cette machine, description faite en se référant au dessin annexé, sur lequel:

— la figure 1 est une vue schématique en plan, avec arrachement de la machine;

— la figure 2 est un schéma indicatif des différentes phases de fonctionnement de la machine selon la figure 1;

— la figure 3 est une vue schématique en plan du dispositif d'orientation des capsules de la machine de la figure 1;

— la fig. 4 est une vue en coupe selon la ligne IV—IV de la fig. 3;

— la fig. 5 est une vue de détail d'une capsule présentant spot et cartouche;

— la fig. 6 est une vue schématique de l'ensemble représenté à la fig. 4, et

— la fig. 7 est une vue schématique d'une tête de capsulage et d'une canule centrale.

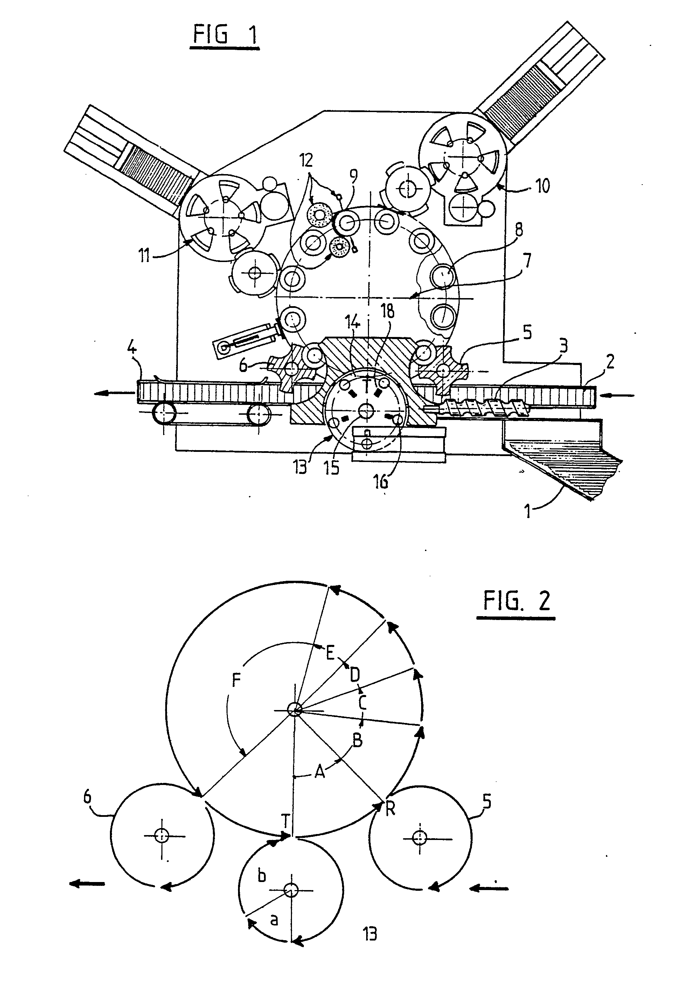

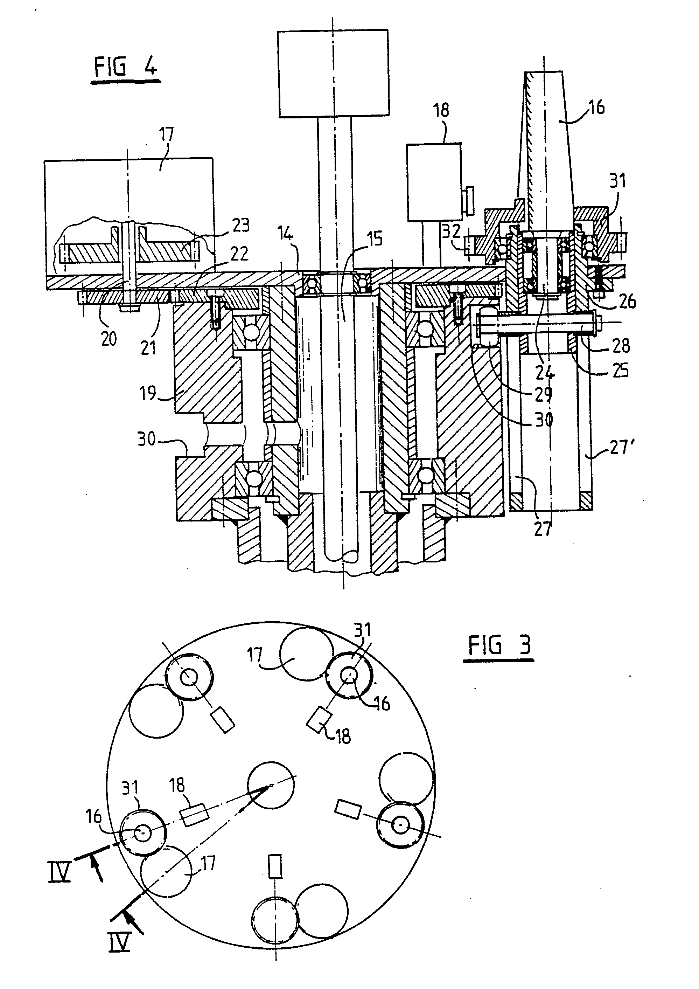

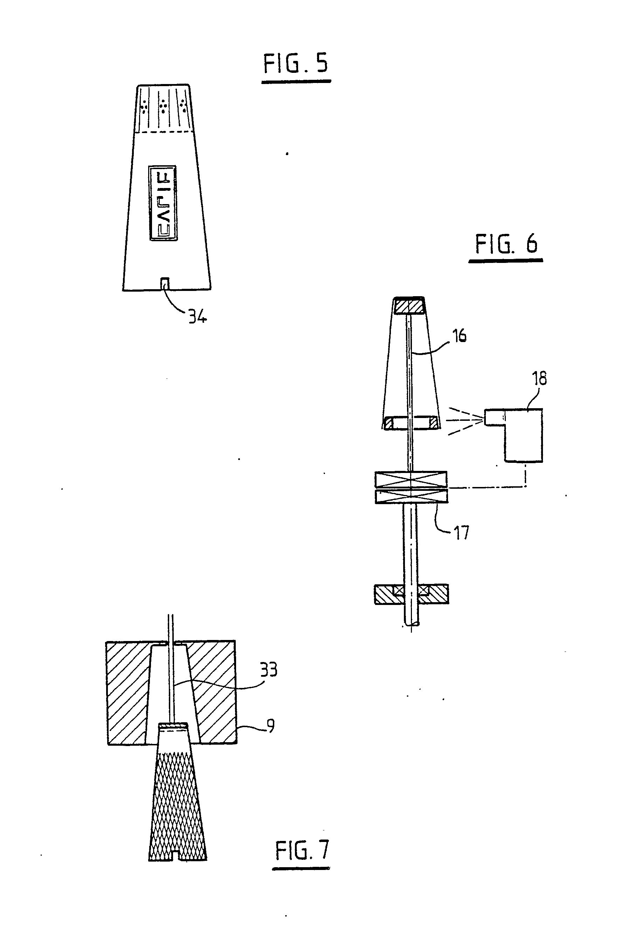

Comme on le voit sur les figs. 1, 4 et 7, la machine comporte essentiellement un magasin de chargement 1 des capsules, une chaîne transporteuse sans fin 2 d'amenée des bouteilles avec une vis d'archimède 3 de sélection ou de mise au pas, une chaîne transporteuse sans fin 4 d'évacuation des bouteilles, une croix d'entrée 5 et une croix de sortie 6, un carrousel 7 portant les sellettes 8 et, au-dessus des sellettes, les têtes de capsulage 9 à l'intérieur desquelles et coaxiale-ment à elles est montée mobile verticalement une canule 33 reliée à une source de vide, un dispositif d'étiquetage 10, un dispositif de contre-étiquetage 11 et une pluralité de brosses et/ou rouleaux mousse 12 pour le lissage des étiquettes.

Entre les croix d'entrée 5 et de sortie 6 est disposé l'appareil d'orientation, ou indexation 13, constitué par un plateau 14 monté rotatif sur un axe fixe 15. Ce plateau 14 porte cinq groupes d'organes d'indexation constitués chacun d'un support de capsule 16 à géométrie rigoureuse et très léger, d'un ensemble embrayage-frein 17 et d'une cellule photoélectrique 18. Le cylindre, lieu des axes verticaux des sellettes 8 et des têtes de capsulage 9 est tangent le long de la ligne verticale T au cylindre, lieu des axes des supports de capsule 16.

Le plateau 14 est entraîné en rotation au-dessus d'une colonne fixe 19 par le moteur qui entraîne également en rotation le carrousel 7 et les appareils d'étiquetage 10, 11. L'axe 20 de l'embrayage-frein 17 porte, à son extrémité inférieure, un pignon 21 qui engrène avec un grand pignon 22 solidaire du montant fixe 19. Sur l'axe 20 sont montés deux électro-aimants grâce auxquels on peut entraîner en rotation une couronne dentée 23 ou la freiner et l'arrêter. L'électro-aimant qui assure l'embrayage, donc l'entraînement du pignon 23, est commandé par un capteur inductif (non représenté), qui détecte la présence d'une capsule sur le support 16, et l'autre électro-aimant qui assure le freinage, donc le blocage du pignon 23, est commandé par le cellule 18. Le support de capsule 16 est monté rotatif, par l'intermédiaire de la queue 24 dans un manchon 25 cylindrique dont il est solidaire en translation. Ce manchon 25 est lui-même monté coulissant dans un manchon extérieur 26 solidaire du plateau 14 et muni de deux fentes verticales 27, 27' diamétralement opposées. Une tige 28 solidaire du manchon 25 peut se déplacer dans ces fentes 27, 27' et porte un galet 29 qui se déplace dans une rainure-came 30 ménagée dans le montant 19.

A la base du support 16 est prévue une bague 31 montée rotative sur le manchon 26 et portant une couronne dentée 32 qui engrène avec la couronne 23 de l'embrayage-frein. Le support 16 est agencé pour coulisser librement dans cette bague 31 mais pour être entraîné en rotation quand cette bague tourne.

Le fonctionnement de la machine qui vient d'être décrite est le suivant:

Les capsules empilées dans le magasin 1 sont automatiquement distribuées sur les supports 16 du plateau tournant 14. Dès que le capteur inductif placé devant un support 16 détecte la présence d'une capsule sur ce support, il excite l'électro-aimant provoquant la solidarisation en rotation de la couronne 23 et du pignon 21 qui, formant satellite, est toujours entraîné en rotation. La couronne 32 est alors entraînée par la couronne 23 et le support 16, porteur d'une capsule, tourne autour de son axe devant la cellule 18. Lorsque le repère, constitué par un spot rectangulaire 34 de la capsule vient sur l'axe optique de la cellule 18, celle-ci excite l'électro-aimant de l'embrayage-frein 17, qui provoque le blocage du pignon 23, donc arrête la rotation du support 16 et de sa capsule. Celle-ci se trouve alors rigoureusement positionnée par rapport aux postes de capsulage et d'étiquetage. Cette phase d'orientation de la capsule s'est opérée au cours de la rotation du plateau 14 représentée par le secteur a sur la fig. 2.

A la fin de cette période d'orientation, le déplacement du galet 29 sur la came 30 provoque la descente de l'ensemble constitué par le manchon 25 et le support 16. Pendant cette descente la capsule, qui n'est plus soutenue par le support, repose par son bord sur la face supérieure de la bague 31. Quand il arrive au point T (fig. 1 et 2) le support 16 est descendu à fond, de telle sorte que sa partie supérieure soit à un niveau légèrement inférieur à celui de la face supérieure de la bague 31. Cette phase de descente du support s'opère sur le secteur b de la fig. 2.

A ce moment, une tête de capsulage 9 et une canule centrale 33 se trouvent au-dessus de la capsule dégagée de son support et la canule vient se poser sur la capsule et la retient par succion. La canule peut alors entraîner la capsule après une légère remontée de façon à dégager la base de la capsule du support 31 et, au cours de la rotation du plateau 7 correspondant au secteur A (fig. 2), la canule 33 avec la capsule remonte à l'intérieur de la tête de capsulage 9.

Lorsque l'ensemble, tête de capsulage 9, canule 33 et capsule, arrive au point R (fig. 2), une bouteille, venant de la chaîne 2, sélectionnée par la vis 3 et transférée par la croix 5, se trouve sur une sellette 8 qui est à l'aplomb de l'ensemble ci-dessus, et coaxiale à lui. Au cours de la rotation du plateau 7 correspondant au secteur B (fig. 2) la canule 33 pose la capsule sur la bouteille et la tête 9 descend pour se trouver en position de capsulage.

Le capsulage s'opère au cours de la rotation correspondant aux secteurs C et D (fig. 2), avec par exemple formation de 4 plis suivie du couchage des plis.

**Revendications**

1. Machine automatique à capsuler et étiqueter les bouteilles ou contenants analogues du type comportant des moyens d'étiquetage (10, 11), des moyens de capsulage (9), des moyens mobiles supports des bouteilles agencés pour faire défiler les bouteilles face aux moyens de capsulage (9) et aux moyens d'étiquetage (10, 11), des moyens d'amenée (5, 6) des bouteilles auxdits moyens supports, des moyens d'orientation (13) des capsules, des moyens de prise et de pose (33) des capsules orientées sur les bouteilles et des moyens d'entraînement synchronisé desdits moyens précédents, caractérisée par le fait que les moyens de prise et de pose (33) des capsules orientées sont solidaires en déplacement des moyens-supports des bouteilles (7) et sont agencés pour déposer les capsules orientées sur les bouteilles maintenues fixes par rapport à leurs moyens de capsulage (9) respectifs.

2. Machine selon la revendication 1, dans laquelle les moyens-supports des bouteilles étant des sellettes (8) d'axe vertical portées par un carrousel (7), et les moyens d'orientation des capsules étant constitués par des pièces-supports (16) d'axe vertical montées sur un plateau rotatif (14) d'axe également vertical, le cylindre lieu des axes des sellettes (8) est tangent au cylindre lieu des axes des supports de capsule (16).

3. Machine selon la revendication 2, dans laquelle, lesdits moyens d'amenée des bouteilles comportant une croix d'entrée (5) et une croix de sortie (6), le plateau rotatif d'orientation (14) est monté entre lesdites croix.

4. Machine selon la revendication 3, dans laquelle les moyens de prise (33) de capsules orientées sont montés coaxiaux aux têtes de capsulage (9) et aux sellettes-supports (8) des bouteilles.

## Patentansprüche

1. Automatische Maschine zum Verkapseln und zum Etikettieren von Flaschen oder analogen Behältern, mit Etikettiereinrichtungen (10, 11), Verkapselungseinrichtungen (9), beweglichen Stützeinrichtungen für die Flaschen, um diese vor den Verkapselungseinrichtungen (9) und den Etikettiereinrichtungen (10, 11), vorbeizubewegen, Übergabeeinrichtungen (5, 6) zum Übergeben der Flaschen an die Stützeinrichtungen, Ausrichteinrichtungen (13) für die Kapsel, Einrichtungen (33) zum Ergreifen und Übergeben der ausgerichteten Kapseln an die Flaschen, und mit einer Antriebseinrichtung zum synchronisierten Antrieb der einzelnen Einrichtungen, dadurch gekennzeichnet, daß die Einrichtungen (33) zum Ergreifen und Übergeben der ausgerichteten Kapseln hinsichtlich der Bewegung mit den Flaschenstützeineinrichtungen (7) gekuppelt und in der Lage sind, die ausgerichteten Kapseln auf den relativ zu ihren jeweiligen Verkapselungseinrichtungen (9) festgehaltenen Flaschen abzulegen.

2. Maschine nach Anspruch 1, bei der die Flaschenstützeinrichtungen durch von einem Karussell (7) getragene Sockel (8) mit vertikalen Achsen und die Kapselausrichteinrichtungen durch auf einem Drehteller (14) angebrachte Teilhalter (16) mit ebenfalls vertikalen Achsen gebildet sind, wobei der durch die Achsen der Sockel (8) bestimmte Zylinder tangential zu dem durch die Achsen der Kapselhalter (16) bestimmten Zylinder liegt.

3. Maschine nach Anspruch 2, bei die Flaschen-Übergabeeinrichtungen ein Zuführkreux (5) und ein Ausgangskreuz (6) umfassen, während der Ausricht-Drehteller (14) zwischen diesen beiden Kreuzen angeordnet ist.

4. Maschine nach Anspruch 3, bei der die Einrichtungen (33) zum Ergreifen der ausgerichteten Kapseln koaxial zu den Verkapselungsköpfen (9) und den Stützsockeln (8) für die Flaschen angeordnet sind.

## Claims

1. Machine for automatically capping and labelling bottles or like containers of the type comprising labelling means (10, 11), capping means (9), mobile bottle support means adapted to convey the bottles in front of the capping means (9) and labelling means (10, 11), means (5, 6) for feeding the bottles to said support means, cap orienting means (13), means (33) for taking hold and depositing the oriented caps on the bottles and power drive means for synchronously driving the above said means, characterized in that the means (33) for taking hold and depositing the oriented caps and the bottles support means (7) have interdependent movements and are adapted to deposit the oriented caps on the bottles maintained fixed with respect to their respective capping means (9).

2. Machine according to claim 1, wherein the bottle support means being supports (8) with vertical axis carried by a rotatable platform (7) and the caps orientating means being constituted by support-pieces (16) with vertical axis carried by a rotatable platform (14) having also a vertical axis, the cylinder, locus of the axis of the supports (8), is tangent to the cylinder, locus of the axis of the cap supports (16).

3. Machine according to claim 2, wherein the bottle feeding means comprising an inlet cross (5) and an outlet cross (6), the orienting rotatable platform (14) is mounted between said crosses.

4. Machine according to claim 3, wherein the means (33) for taking hold of the oriented caps are mounted coaxial with the capping heads (9) and the bottle supports (8).

0 052 045

FIG 1

FIG. 2

0 052 045

FIG 4

FIG 3

FIG. 5

34

FIG. 6

16

18

17

33

9

FIG. 7